(19) **Europäisches Patentamt / European Patent Office / Office européen des brevets**

(11) **EP 4 647 481 A1**

(12) # EUROPEAN PATENT APPLICATION

(43) Date of publication:
**12.11.2025 Bulletin 2025/46**

(21) Application number: **24382515.5**

(22) Date of filing: **10.05.2024**

(51) International Patent Classification (IPC):
**C11B 13/00** (2006.01)   **C07C 51/09** (2006.01)
**C07C 67/31** (2006.01)   **C08G 63/06** (2006.01)

(52) Cooperative Patent Classification (CPC):
**C11B 13/00; C08G 63/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Universidad De Valladolid**
**47002 Valladolid (ES)**

(72) Inventors:
- **COCERO ALONSO, María José**
  **E-47002 Valladolid (ES)**
- **CANTERO SPOSETTI, Danilo**
  **E-47002 Valladolid (ES)**
- **LEONTIJEVIC, Vesna**
  **E-47002 Valladolid (ES)**

(74) Representative: **ABG Intellectual Property Law, S.L.**
**Avenida de Burgos, 16D**
**Edificio Euromor**
**28036 Madrid (ES)**

(54) **PROCESS FOR THE OBTENTION OF A CUTIN-ENRICHED PRODUCT**

(57)   The present invention discloses a process for obtaining a cutin-enriched product from the cutin-containing portion of a plant matter, wherein said process comprises treating said cutin-containing portion with water at high temperatures and pressures. The invention also discloses a cutin-enriched product and uses thereof.

EP 4 647 481 A1

**Description**

**FIELD OF THE INVENTION**

The present invention relates to a process for obtaining a cutin-enriched product from a cutin-containing plant material. The invention also relates to a cutin-enriched product and to the uses thereof.

**BACKGROUND OF THE INVENTION**

One of the most important challenges for agriculture in the coming future is to feed the growing world population. Accordingly, post-harvesting residues, also called "agro-waste" are expected to increase. This "agro-waste" is composed by the non-edible plant waste from crops, roots, fruits and other vegetables. This type of plant-based matter is rich in useful substances, such as lipids, polysaccharides or aromatic compounds, with potential applications in the fabrication of polymeric materials (Heredia-Guerrero et al., Journal of Experimental Botany, vol. 68, no.19, pp 5401-5410, 2017). However, this residues need to be chemically treated or isolated to extract the specific macromolecules of interest with potential industrial applications. Examples of this type of macromolecules are, among others, cellulose, lignin, suberin or cutin.

Cutin is a major structural component of the plant cuticle, the outer layer of aerial parts of the plant. It is a long-chain polyester made from hydroxyl or epoxy fatty acids linked by ester bonds. In nature, it appears as an amorphous polymeric network, mechanically and chemically stable and resistant (Fich et al., Annu. Rev. Plant Biol. 2016, 29:67:207-233; Zeisler-Diehl et al., J Plant Physiol 2018, 227:66-74, doi: 10.1016/j.jplph.2018.03.018).

Further, the cutin matrix is accompanied by hydrophobic compounds collectively referred to as waxes. Additionally, the cutin matrix contains a modest number of phenolic compounds, mostly hydroxycinnamic acid derivatives, and flavonoids. Due to the characteristics mentioned above, cutin is set apart from other polymers, such as polyhydroxyalkanoates (PHA) or other thermoplastic polyesters produced through chemical or enzymatic polymerizations, that are currently attracting industrial and biotechnological interest (Benitez et al., Biochim. Biophys. Acta, 2004; 1674(1), 1-3, doi: 10.1016/j.bbagen.2004.06.012).

Currently, the most common methods reported in the literature for cutin isolation follow long multi-step procedures that involve a dewaxing step accompanied by the use of enzymes for the removal of polysaccharides or alkaline hydrolysis at elevated temperature. On top of that, reported processes require a long reaction time, additional separation steps, organic co-solvent(s), and neutralization of reactants required in alkaline hydrolysis. Furthermore, both processes generate quite a small amount of product, making them more suitable for laboratory-scale use and chemical analysis. Several examples of alkaline hydrolysis of cutin-containing plants have been reported, thus, despite a few variations, the protocols are well known.

WO2023198943 A1 relates to a method that allows cutin from plant waste to be obtained by milling the plant waste, adding an alkaline solution and performing a first ultrasonic extraction in an alkaline medium. The supernatant obtained is separated and mixed with an acid solution from which cutin will precipitate after the solution has been kept at least 4°C for at least four hours.

EP 4116352 A1 teaches a process for the extraction of cutin from tomato waste comprising soaking the tomato waste in an alkaline solution subjecting this alkaline solution to heat treatment, isolating the liquid phase of the heat-treated alkaline mixture from the solid residue, the liquid phase being an alkaline cutin solution. After acidifying the alkaline cutin solution by adding an organic acid, cutin from the liquid phase was isolated by means of centrifugation.

EP3039064A1 discloses a method for extraction of a polyester polymer composed of a complex mixture of interesterified, long-chain w-hydroxy acid with typically a 16- or 18-carbon skeleton from the waste of tomato peels. The method comprises a thermal treatment of the tomatoes peels, in which tomato peels are immerged in an alkaline solution; a filtration phase; a step of acidification, a centrifugation phase after which the supernatant is discarded or reintroduced in the process for another extraction, while the solid residue is kept and centrifuged.

Despite cutin extraction being known in previous reports, the harsh process of alkaline hydrolysis leads to total hydrolysis of ester bonds after which a mixture of fatty hydroxyl acid monomers is obtained. The monomers may then be re-polymerized also with other synthetic or naturally derived suitable monomers, however the depolymerization-repolymerization protocol is flawed from the energy- and step-efficiency viewpoint as it does not take advantage of the native polyester scaffold which is inevitably lost.

On the other hand, besides alkaline hydrolysis, thermal processes are also known for a clean depolymerization of cutin-containing plant parts. For example, EP3386303A1 teaches methods of preparing cutin-derived monomers, oligomers, or combinations thereof from cutin-containing plant matter. The method comprises heating the cutin-derived plant matter in a solvent at elevated temperature and pressure, which, combined with long reaction times, enable a clean and quantitative depolymerization of cutin.

Methods capable of affording native cutin (or a product enriched in native cutin) in a straightforward manner are desirable as such bio-polymeric products may be of great interest not only in a variety of fields (from cosmetics to materials science) but could also exploit all the advantageous properties of cutin without the need for further depolymerisation/re-polymerization steps.

In summary, improved methods of native cutin enrichment without producing its depolymerisation are currently unavailable and would be highly desirable due to the potential uses of the native cutin polymer structure.

## BRIEF DESCRIPTION OF THE INVENTION

The inventors have surprisingly found that by treating cutin-containing plants or parts thereof with water at high temperatures (i.e. between 300 and 500 °C) and pressures (i.e. between 85 and 400 bar), and for a short reaction time (i.e. less than 50 seconds), a cutin-enriched product can be obtained wherein the native structure of the cutin is preserved. This process improves on the efficiency of removal of non-cutin species from the plant cuticles, such as waxes, essential oils, and other soluble species in the aqueous mediums under the specified conditions, without breaking up the native cutin structure which is most of the times subjected to re-polymerization. The efficiency of the process of the invention is even more evident in the supercritical range of temperatures and pressures, wherein extremely short reaction times (between fractions of a second and as low as 2 seconds) are required for enriching a plant matter containing cutin with cutin, however specific subcritical conditions of temperature and pressure may also afford similar results still at very short reactions times (only units of seconds). Advantageously, the addition of acid(s) may further improve the efficiency of the process as the polysaccharide fraction of the cutin-containing plant is degraded and removed with the liquid fraction formed with the treatment while leaving the cutin in the cutin-enriched product virtually untouched.

Therefore, a first aspect of the invention relates a process for obtaining a cutin-enriched product from the cutin-containing portion of a plant matter, said process comprising treating said cutin-containing portion with water at a temperature between 300 and 500 °C and at a pressure between 85 and 400 bar, during less than 50 seconds.

Another aspect of the invention relates to a cutin-enriched product comprising, preferably consisting of:

- between 40 and 75 wt.% cutin;

- between 60 and 25 wt.% consisting of extractives, cellulose and proteins; and

wherein said cutin-enriched product is characterized by a D90 size particle below 180 $\mu$m, preferably below 150 $\mu$m, even more preferably below 120 $\mu$m as measured by DLS.

Alternatively, an aspect of the invention relates to a cutin-enriched product, obtainable by the process of the first aspect, comprising, preferably consisting of:

- between 40 and 75 wt.% cutin;

- between 60 and 25 wt.% consisting of extractives, cellulose and proteins; and

wherein said cutin-enriched product is characterized by a D90 size particle below 180 $\mu$m, preferably below 150 $\mu$m, even more preferably below 120 $\mu$m as measured by DLS.

Lastly, the present invention relates to the use of the cutin-enriched product as defined above in the manufacture of polymers, preferably bioplastics, more preferably polyesters; material coatings; cosmetic products; and food emulsifiers.

More particular embodiments of the present invention are explained in more detail in the detailed description, drawing and examples.

## DESCRIPTION OF THE FIGURES

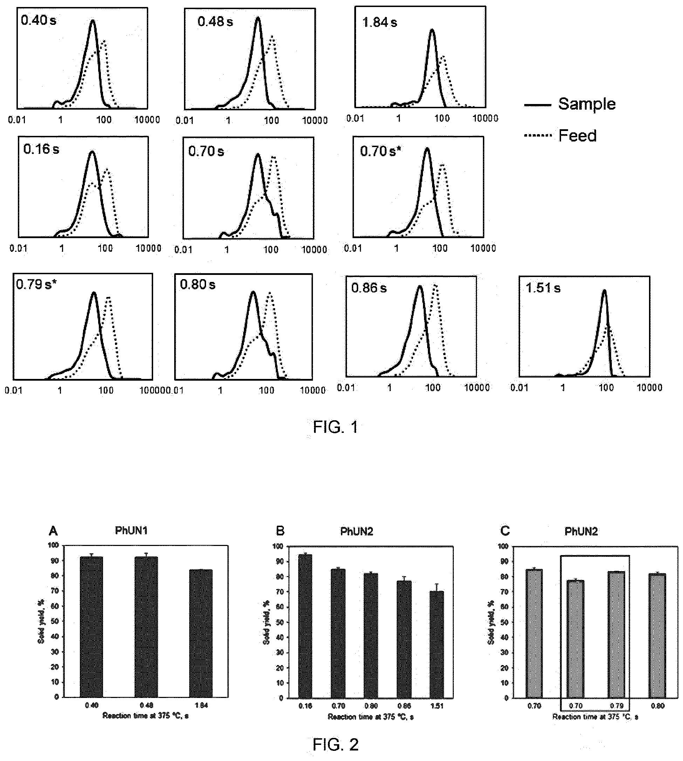

Figure 1. Normal distribution of particles in the size of samples and feeds.

Figure 2. Solid yield for experiments done on PhUN1 (A), on PhUN2 (B) and comparison of solid yields for experiments without and with the addition of acetic acid - framed (C).

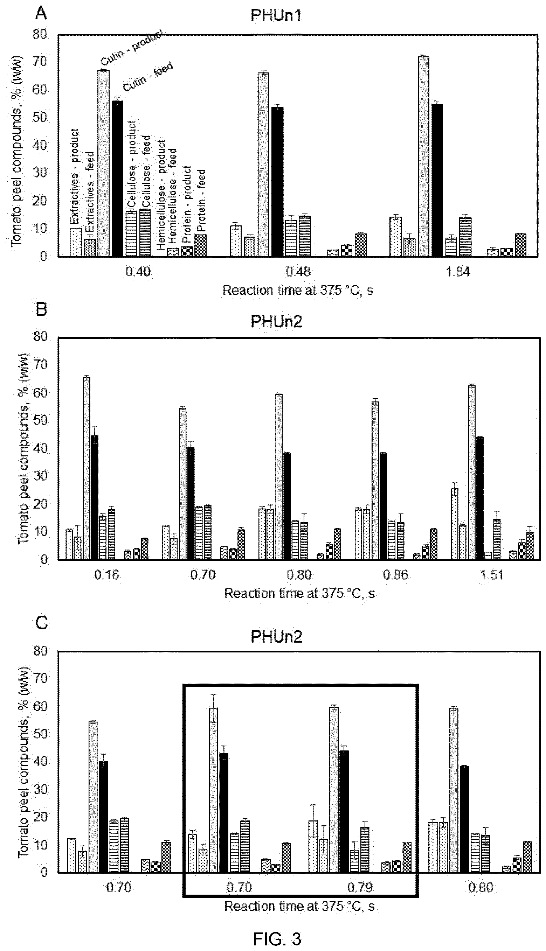

Figure 3. Solid sample composition and feed composition over different reaction times at 375 °C for experiments done on PhUN1 (A), on PhUN2 (B) and comparison of experiments without and with the addition of acetic acid - framed (C).

**Figure 4.** The amount of cellulose and protein remaining in the solid part of the sample after the process for experiments done on PhUN1 (A), on PhUN2 (B) and comparison of experiments without and with the addition of acetic acid - framed (C).

**Figure 5.** FTIR spectrum of raw tomato peel, sample 0.48 s and sample 1.51 s in the range of wavenumber 2800 - 3700 cm$^{-1}$ (A); 900 - 1800 cm$^{-1}$ (B).

**Figure 6.** Microscope pictures of raw tomato peel before milling (A) and after milling (B) and ESEM picture of tomato peel after milling (C).

**Figure 7.** ESEM picture of sample suspensions for different applied conditions: upper row 5000x magnification; bottom row 80000x magnification.

## DETAILED DESCRIPTION OF THE INVENTION

A first aspect of the invention relates a process for obtaining a cutin-enriched product from the cutin-containing portion of a plant matter, said process comprising treating cutin-containing portion with water at a temperature between 300 and 500 °C and at a pressure between 85 and 400 bar, during less than 50 seconds. This first aspect will be also referred to as "process of the invention" throughout the text.

Cutin may vary in composition and structure depending on the plant species, tissue type, and environmental conditions, however in general terms, in the context of the present invention refers to a waxy substance found in the cuticle of plants and composed mainly of fatty acids, which are cross-linked to form a polyester network.

A "plant matter" refers to organic material derived from plants. This term encompasses various parts of plants such as leaves, stems, roots, flowers, fruits, and seeds, as well as the products derived from them. Plant matter is composed of complex organic compounds including a cutin-containing portion, carbohydrates (such as cellulose, hemicellulose, starch, and sugars), lignin, proteins, fats, oils, vitamins, minerals, and other organic molecules.

Based on the above, the cutin-containing portion of a plant matter refers to portions that contain cutin in high weight-percentage of cutin (e.g., fruit peels, leaves, shoots, stems, aerial plant organs, etc.), as well as other portions that have a low density of cutin (e.g., seeds), preferably the former. Preferably, the cutin-containing portion of a plant matter contains at least 25 wt.%, at least 30 wt.%, at least 35 wt.% of cutin.

Any suitable amount of cutin-containing portion of a plant matter for the process of the invention could be chosen by a skilled person, preferably at least 1 gram, more preferably at least 1 Kg.

The "cutin enriched product" as defined in the present invention is a product, preferably a solid product, where cutin wt.% increases after treating the cutin-containing portion of a plant matter in the conditions defined in the first aspect and cutin is the major component (cutin wt.% is more than 50 wt.% in the product).

Any plant matter which comprises cutin is suitable to be used in the process of the invention leading to a cutin enriched product. As cutin is virtually present in every aerial part of plants, in a specific embodiment, the cutin-containing aerial portion of a plant matter is used in the process of the invention; more particularly, the aerial parts of the plant matter do not comprise the bark of said plant matter.

In an embodiment, the cutin-containing portion of a plant matter is the cutin-containing portion of fruit-bearing plant matter, preferably the fruit, wherein the fruit-bearing plant matter is selected from tomato, grape, apple, pear, papaya, peach, or a combination thereof.

In an embodiment, the process of the invention comprises the steps of:

a) optionally, pre-treating the cutin-containing portion of a plant matter;
b) mixing said optionally pretreated cutin-containing portion of a plant matter with water to obtain a suspension;
c) treating said suspension with water at a temperature between 300 and 500 °C and at a pressure between 85 and 400 bar to obtain the cutin-enriched product and a liquid fraction, wherein said treatment is carried out during less than 50 seconds; and
d) optionally, separating the cutin-enriched product from the liquid fraction

Optionally, the process of the invention comprises a pre-treatment step a). This pre-treatment aims to reduce the size of the raw material before the formation of the suspension and/or to further separate the cutin-containing portion (e.g. fruit peels and/or seeds) from the remainder of the plant matter. Even more particularly, the pre-treatment may further separate the cutin-containing portion with higher cutin content (e.g. fruit peels) from those with lower cutin content (e.g. seeds). Any known pre-treatment known in the technical field of the present invention may be useful as a pre-treatment step. In an embodiment, the cutin-containing portion of a plant matter is pre-treated by pressing, grinding, drying, centrifugation, (ultra)sonication, milling (wet or dry milling), sCO$_2$ extraction, CO$_2$ explosion, ammonia explosion, steam explosion or a combination thereof. Different types of pretreatments can also be sequentially carried out. For example, when fruit-bearing plants are used as cutin-containing portion, the sequence of pressing, separation of peel and juice and peel drying may be particularly carried out.

In a particular embodiment, the cutin-containing portion of a plant matter is pre-treated by pressing said cutin-containing portion, preferably by pressing the fruit of a fruit-bearing plant matter selected from tomato, grape, apple, pear, papaya, peach, or a combination thereof, in order to obtain a pomace. Said pomace may be, optionally, further pre-treated according to any of the pre-treatment methods already mentioned above (preferably, drying, grinding and/or milling) or directly suspended in water and subjected to step c).

Thus, in a preferred embodiment, the pomace of tomato, grape, apple, pear, papaya, peach, or a combination thereof is used in step b of the step of the invention; more preferably the peel of said fruits.

In the context of the invention, the term "pomace" refers to the by-product remaining after known operations such as fruit or vegetable juice pressing processes, wine crush operations, puree and concentrate operations, canning processes, and other food manufacturing processes. Pomace may include, for example, skins, pulp, seeds, and edible part of stems of the fruit and/or vegetable. In some cases the pomace can derive from or contain other parts of the fruit and vegetable such as pod, stalk, flower, root, leaves and tuber. In a juice extraction process, the pomace is typically in the form of a part of press cake.

In a preferred embodiment, tomato pomace is used in the process of the invention (step b); even more preferably tomato peel is used. As tomato pomace is available from many suppliers worldwide (for example, Morning Star Company, LaBudde Group, Aterimar, etc.), its efficient valorization can be achieved by employing the process of the invention.

The optionally pre-treated cutin-containing portion of a plant matter is mixed with water to obtain a suspension (step b). In an embodiment the amount of said cutin-containing portion of a plant matter in the suspension is between 0.1 and 50%, preferably between 1 and 30%, even more preferably between 4 and 11% (as w/w = weight/weight).

In another embodiment, the amount of said cutin-containing portion of a plant matter in the suspension is at least 0.1 %, at least 0.5%, at least, 1%, at least 2%, at least 3%, preferably at least 4% (w/w).

In another embodiment, the amount of said cutin-containing portion of a plant matter in the suspension is less than 50%, less than 40%, less than 30%, preferably less than 20% (w/w).

In an embodiment, no additives are used in the process of the invention, meaning that only water and the cutin-containing portion of a plant matter are mixed.

However, in order to improve the performance of the process, the inventors have found that additives may be further added to the suspension of step b). In an embodiment, an acid is further added to the suspension of step b).

Acids promote the hydrolysis of polysaccharides (cellulose, hemicellulose) while the stability of the cutin ester bond is unaffected. The acid can be an organic or an inorganic acid. In an embodiment, the acid is an acid selected from the group consisting of acetic acid, formic acid, p-toluenesulfonic acid (PTSA), trifluoroacetic acid, camphorsulphonic acid, citric acid, oxalic acid HCl, $H_2SO_4$, $HNO_3$, $H_3PO_4$, and mixtures thereof; preferably acetic acid and/or $H_2SO_4$; more preferably the acid is acetic acid.

In another embodiment the acid is added in an amount comprised between 10% and 70% on a dry basis suspension, preferably between 15% and 60% on a dry basis suspension, more preferably between 20% and 50% on a dry basis suspension.

The addition of acid causes the pH of the water to drop below a neutral pH. Thus, alternatively, the acid is added so as the pH of the water is below 7, preferably below 6.5, more preferably below 6. In another embodiment, the acid is added so as the pH of the water is comprised between 2 and 6.5, preferably between 2.5 and 6.

In an embodiment, the temperature for treating the cutin-containing portion of a plant matter is comprised between 310 °C and 500 °C, preferably between 310 °C and 450 °C, more preferably between 310 °C and 400 °C.

In an embodiment, the temperature is comprised between 374 °C and 450 °C, even more preferably the temperature is between 380 °C and 400 °C.

In an alternative embodiment, the temperature comprised between 300 °C and 370 °C, more preferably between 300 °C and 350 °C, even more preferably between 305 °C and 325 °C.

In an embodiment, the pressure for treating the cutin-containing portion of a plant matter is comprised between 150 and 350 bar, preferably between 175 and 300 bar, more preferably between 200 and 260 bar.

In an embodiment, the pressure for treating the cutin-containing portion of a plant matter is comprised between 221 and 350 bar, preferably between 230 and 300 bar, more preferably between 240 and 260 bar.

In an alternative embodiment, the pressure for treating the cutin-containing portion of a plant matter is comprised between 100 bar and 220 bar, preferably between 150 bar and 220 bar, more preferably between 180 bar and 210 bar.

In an embodiment, in step c), the temperature is comprised between 310 °C and 500 °C, preferably between 310 °C and 450 °C, more preferably between 310 °C and 400 °C, and the pressure is comprised between 150 and 350 bar, preferably between 175 and 300 bar, more preferably between 200 and 260 bar.

In a particular embodiment of the invention, the water suspension of the cutin-containing portion of a plant matter is treated with water in supercritical conditions. One skilled in the art would know that the supercritical conditions for water are reached at 374 °C and 221 bar. Thus, in a preferred embodiment, the process comprises treating the cutin-containing portion of a plant matter with water at a temperature between 374 °C and 500 °C and at a pressure between 221 and 400 bar, more preferably at a temperature between 374 and 450 °C and at a pressure between 221 and 260 bar.

In an alternative particular embodiment, the process comprises treating the cutin-containing portion of a plant matter with water at a temperature between 300 °C and 370 °C and at a pressure between 100 bar and 220 bar, more preferably at a temperature between 300 °C and 350 °C and at a pressure between 150 bar and 220 bar, even more preferably at a temperature between 305 °C and 325 °C and at a pressure between 180 bar and 210 bar.

Due to the high temperatures and pressures reached in the treatment of the cutin-containing portion of a plant matter for obtaining a cutin-enriched product, advantageously short reaction times could be used, surprisingly without any negative consequence on the cutin native structure in the cutin-enriched product. Maintaining the reaction time under 50 seconds is necessary for obtaining the a cutin-enriched product wherein cutin preserves its native structure and depolymerisation of the cutin ester linkages is avoided, even at the high temperatures/pressures as those defined in the process of the invention.

In preferred embodiments of the first aspect, the treatment of the cutin-containing portion of a plant matter is performed during less than 30 seconds, or even less than 10 seconds.

In particular embodiments, the treatment time is less than 3 seconds, less than 2 seconds, even more preferably less than 1.5 seconds, particularly when supercritical conditions are adopted.

In an alternative embodiment of the invention, the treatment of the one or more plants is performed between 0.01 to 50 seconds, preferably between 0.02 to 30 seconds, between 0.03 to 10 seconds, between 0.04 to 3 seconds, even more preferably between 0.05 to 1.5 seconds.

Thus in a particular embodiment, the process comprises treating the water suspension of the cutin-containing portion of a plant matter with water at a temperature between 374 °C and 500 °C and at a pressure between 221 and 400 bar during a time comprised between 0.04 to 3 seconds, more preferably at a temperature between 374 and 450 °C and at a pressure between 221 and 260 bar during a time comprised between 0.05 to 1.5 seconds.

In an alternative particular embodiment, the process comprises treating the water suspension of the cutin-containing portion of a plant matter with water at a temperature between 300 °C and 370 °C and at a pressure between 100 bar and 220 bar during a time comprised between 1 and 30 seconds, more preferably at a temperature between 300 °C and 350 °C and at a pressure between 150 bar and 220 bar during a time comprised between 2 and 20 seconds, even more preferably at a temperature between 305 °C and 325 °C and at a pressure between 180 bar and 210 bar during a time comprised between 3 and 10 seconds.

From treating the cutin-containing portion of a plant matter with water under the conditions describe above, and subsequent cooling a cutin-enriched product and a liquid fraction are obtained. The cooling is preferably performed to room temperature. The liquid fraction mainly comprises extractives, proteins and cellulose/hemicellulose and/or the corresponding monomers thereof.

Optionally, a step of separating the cutin-enriched product from the liquid fraction can be performed. This separation step can be performed by any means commonly known by the person skilled in the art. In an embodiment, the separation is performed by centrifugation and/or filtration, preferably by filtration.

Optionally, the separated cutin-enriched product may be further mixed with other components, preferably with gums and/or vegetable oils. This mixing may achieve a cutin-enriched product where the properties of the cutin-containing portion in the plant cuticles are mimicked.

Non-limiting examples of suitable gums are guar gum, locust bean gum, gellan gum, Arabic gum, carrageenan.

Non-limiting examples of vegetable oil are olive oil, rapeseed oil, soybean oil, corn oil, peanut oil, avocado oil.

The process of the invention can be carried out in any reactor capable of holding the temperatures and pressures defined in the first aspect, typically a stainless steel reactor, preferably a tubular stainless-steel reactor. Such reactor comprises a vessel where the water suspension of the cutin-containing portion of a plant matter and the water are introduced, either from the same inlet or from different inlets. In order to withstand the high temperatures and pressures required, the reactor is typically made of corrosion-resistant materials such as stainless steel or alloys.

The reactor system includes a heat source, such as electric heaters or combustion chambers, to raise the temperature of the mixture of the one or more plants and water to the targeted temperature.

In a preferred embodiment of the first aspect, supercritical conditions within the defined ranges of pressure and temperature are used, thus heat is applied to the reactor vessel to achieve desired temperature and pressure.

The reactor includes a feeding system by which the suspension of cutin-containing portion of a plant matter and water are introduced into the reactor vessel either continuously or batch-wise. Preferably, the reactor is a continuous reactor. Water is injected into the reactor vessel at high pressure and temperature, preferably to reach supercritical water conditions. However, also subcritical water conditions may be used according to the ranges of pressure and temperature defined above.

In particular, the reactor vessel is preceded by a T mixer where the preheated SCW stream and suspension with the cutin-containing material stream are mixed. After instantaneous mixing, a stream comprising the water medium and the cutin-containing portion runs through the above-mentioned reactor under the pressure, temperature and reaction time conditions defined in the first aspect. The residence time of the one or more plants in the reactor vessel, as already stated, is carefully controlled (under 50 seconds) to optimize the conversion process, maximize the yield of desired products and avoid cutin degradation/depolymerisation.

The reactor comprises also an outlet, where the output stream comes out. At the reactor outlet, a decompression valve is placed. The output stream is then instantaneously cooled down. This cooling prevents further side-reactions.

Optional agitation or mixing mechanisms within the reactor vessel may ensure thorough mixing of the cutin-containing portion of a plant matter and water, particularly in a batch reactor. The optional agitation or mixing mechanisms promote efficient heat and mass transfer and enhance the extraction process.

Next, as already stated, the reaction mixture is optionally subjected to separation processes such as filtration and/or centrifugation.

Apparatuses for carrying out the process of the invention are already known, such as in C. M. Martinez et al., The Journal of Supercritical Fluids, Vol. 143, 2019, 242-250, DOI: 10.1016/j.supflu.2018.08.017).

The cutin enriched product comprises more than 50 wt.% cutin. The cutin enrichment in the product (compared to cutin content in the initial cutin-containing portion of a plant matter) is at least 10 wt.%, at least 20 wt.%, at least 30 wt.%, preferably the cutin enrichment is comprised between 10 and 50 wt.%

Further extraction of the cutin enriched product, preferably in solid form, with an organic solvent may selectively remove additional impurities or undesired components, such as residual extractives and proteins. By performing this additional extraction with an organic solvent, the content of cutin in the solid is then further increased up to 80%, 90%, 95% or even up to 99%.

In a preferred embodiment, the invention refers to a process for obtaining a cutin-enriched product from the pomace of a fruit selected from tomato, grape, apple, pear, papaya, peach, or a combination thereof, preferably from tomato pomace, said process comprising the steps of:

a) optionally, mechanically grinding and/or milling the pomace, preferably tomato pomace, and, optionally, separating tomato peel from tomato seeds in the pomace;

b) mixing said optionally mechanically pre-treated pomace, preferably tomato pomace, with water to obtain a suspension;

c) treating said suspension with water at a temperature comprised between 310 °C and 450 °C, preferably between 310 °C and 400 °C, and at a pressure comprised between 175 and 300 bar, preferably between 200 and 260 bar, to obtain the cutin-enriched product and a liquid fraction, wherein said treatment is performed during a time between 0.03 and 10 seconds; and

d) optionally, separating the cutin-enriched product from the liquid fraction by centrifugation and/or filtration.

In a more preferred embodiment of the first aspect of the invention, the invention refers to a process for obtaining a cutin-enriched product from tomato pomace, said process comprising the steps of:

a) mechanically grinding and/or milling the tomato pomace;

b) mixing said mechanically pre-treated tomato pomace with water to obtain a suspension;

c) treating said suspension with supercritical water at a temperature comprised between 374 °C and 450 °C and at a pressure comprised between 221 bar and 260 bar to obtain the cutin-enriched product and a liquid fraction, wherein said treatment is performed during a time between 0.05 and 1.5 seconds;

d) separating the cutin-enriched product from the liquid fraction by centrifugation and/or filtration;

e) optionally, subjecting the cutin-enriched product to washing with an organic solvent and drying.

In a particular embodiment of the first aspect of the invention, the invention refers to a process for obtaining a cutin-enriched product from tomato pomace, said process comprising the steps of:

a) mechanically grinding and/or milling the tomato pomace;

b) mixing said mechanically pre-treated tomato pomace with water to obtain a suspension;

c) treating said suspension with supercritical water at a temperature between 300 °C and 370 °C and at a pressure between 100 bar and 220 bar during a time comprised between 1 and 30 seconds, more preferably at a temperature between 300 °C and 350 °C and at a pressure between 150 bar and 220 bar during a time comprised between 2 and 20 seconds, even more preferably at a temperature between 305 °C and 325 °C and at a pressure between 180 bar and 210 bar during a time comprised between 3 and 10 seconds so as to obtain the cutin-enriched product and a liquid fraction;

d) separating the cutin enriched product from the liquid fraction by centrifugation and/or filtration;

e) optionally, subjecting the cutin enriched product to washing with an organic solvent and drying.

Cutin-enriched product

As a result of the method of the invention a cutin-enriched product, preferably in a solid form, is obtained. Therefore, another aspect of the invention relates to a cutin enriched product obtainable by means of the process defined in the first aspect of the invention.

In a particular embodiment, the cutin-enriched product obtainable by means of the process defined in first aspect, comprises, preferably consists of:

- between 40 and 75 wt.% cutin;

- between 25 and 60 wt.% consisting of extractives, cellulose and proteins; and

wherein said cutin enriched product is characterized by a D90 size particle below 180 $\mu$m, preferably below 150 $\mu$m, even more preferably below 120 $\mu$m as measured by DLS.

The invention also refers to a cutin-enriched product, wherein said cutin-enriched product comprises, preferably consists of:

- between 40 and 75 wt.% cutin;

- between 60 and 25 wt.% consisting of extractives, cellulose and proteins; and

wherein said cutin enriched product is characterized by a D90 size particle below 180 $\mu$m, preferably below 150 $\mu$m, even more preferably below 120 $\mu$m as measured by DLS.

In particular, the cutin-enriched product obtainable by means of the process defined in the first aspect of the invention comprises:

- between 40 and 75 wt.% cutin;

- between 10 and 25 wt.% extractives;

- between 2.5 and 20 wt.% cellulose; and

- between 2.5 and 7.5 wt.% proteins;

and wherein said cutin enriched product is characterized by a size particle below 180 $\mu$m, preferably below 150 $\mu$m, even more preferably below 120 $\mu$m as measured by DLS (Dynamic Light Scattering).

In the context of the invention the term "extractives" refers to fats, resin, wax, phenolic compounds, pigments, oils, and other organic compounds unbounded together which are presents in the cutin enriched product. These can be further removed by appropriate organic solvents such as ethanol, $sCO_2$, methanol, supercritical methanol, acetone, hexane, chloroform, dichloromethane, diethyl ether, ethyl acetate, tetrahydrofuran and isopropanol.

The specific composition of the cutin enriched product will depend on the specific conditions (temperature, pressure and reaction time). Generally, under identical conditions of pressure and temperature, the shorter the reaction time the lower the wt.% of cutin enrichment, whereas by prolonging the reaction time the higher is the enrichment (at the same time some minor cutin depolymerisation might occur).

In an embodiment of the invention the cutin enriched product obtainable by means of the process of the invention comprises between 45 and 75 wt.% cutin, preferably between 50 and 75 wt.% cutin, even more preferably between 55 and 75 wt.% cutin.

In an embodiment of the invention the cutin enriched product obtainable by means of the process of the invention comprises between 12 and 25 wt.% extractives, preferably between 15 and 25 wt.% extractives.

In an embodiment of the invention the cutin enriched product obtainable by means of the process of the invention comprises between 5 and 20 wt.% cellulose, preferably between 10 and 20 wt.% cellulose.

In an embodiment of the invention the cutin enriched product obtainable by means of the process of the invention comprises between 3 and 7 wt.% proteins, preferably between 3 and 6 wt.% cellulose.

In an embodiment, the cutin enriched product obtainable by means of the process of the invention does not comprise hemicellulose.

A cutin-enriched product obtainable by means of the process of the first aspect, wherein the process is characterized by a reaction time comprised between 3 and 10 seconds, a temperature comprised between 300 °C and 320 °C and a pressure comprised between 200 bar and 220 bar; and

wherein the cutin enriched product comprises:

- between 55 and 68 wt.% cutin;

- between 9 and 11 wt.% extractives;

- between 15 and 17 wt.% cellulose; and

- between 3 and 5 wt.% proteins; and

wherein said cutin enriched product is characterized by a size particle below 180 $\mu$m, preferably below 150 $\mu$m, even more preferably below 120 $\mu$m as measured by DLS (Dynamic Light Scattering).

A cutin enriched product obtainable by means of the process of the first aspect, wherein the process is characterized by a reaction time comprised between 1 and 1.5 seconds, a temperature comprised between 380 °C and 400 °C and a pressure comprised between 250 bar and 260 bar; and

wherein the cutin enriched product comprises:

- between 70 and 75 wt.% cutin;

- between 13 and 15 wt.% extractives;

- between 5 and 8 wt.% cellulose; and

- between 2 and 4 wt.% proteins; and

wherein said cutin enriched product is characterized by a size particle below 180 $\mu$m, preferably below 150 $\mu$m, even more preferably below 120 $\mu$m as measured by DLS (Dynamic Light Scattering).

A cutin enriched product obtainable by means of the process of the first aspect, wherein the process is characterized by a reaction time of less than 1 second and more than or equal to 0.6 seconds, a temperature comprised between 380 °C and 400 °C and a pressure comprised between 240 bar and 260 bar; and

wherein the cutin enriched product comprises:

- between 60 and 65 wt.% cutin;

- between 24 and 26 wt.% extractives;

- between 2 and 4 wt.% cellulose; and

- between 5 and 7 wt.% proteins; and

wherein said cutin enriched product is characterized by a size particle below 180 $\mu$m, preferably below 150 $\mu$m, even more preferably below 120 $\mu$m as measured by DLS (Dynamic Light Scattering).

A cutin enriched product obtainable by means of the process of the first aspect, wherein the process is characterized by a reaction time of less than 0.6 seconds, a temperature comprised between 380 °C and 400 °C and a pressure comprised between 240 bar and 260 bar; and

wherein the cutin enriched product comprises:

- between 54 and 66 wt.% cutin;

- between 10 and 14 wt.% extractives;

- between 8 and 20 wt.% cellulose; and

- between 3 and 4 wt.% proteins; and

and wherein said cutin enriched product is characterized by a size particle below 180 $\mu$m, preferably below 150 $\mu$m, even more preferably below 120 $\mu$m as measured by DLS (Dynamic Light Scattering).

A cutin-enriched product obtainable by means of the process of the first aspect, wherein the process is characterized by a reaction time at 375 °C (as defined in the examples) comprised between 1 and 3 seconds, a temperature comprised between 380 °C and 400 °C and a pressure comprised between 240 bar and 260 bar; and wherein the cutin enriched product comprises:

- between 62 and 72 wt.% cutin;

- between 14 and 25 wt.% extractives;

- between 2 and 7 wt.% cellulose; and

- between 3 and 6 wt.% proteins; and

wherein said cutin enriched product is characterized by a size particle below 180 $\mu$m, preferably below 150 $\mu$m, even more preferably below 120 $\mu$m as measured by DLS (Dynamic Light Scattering).

A cutin enriched product obtainable by means of the process of the first aspect, wherein the process is characterized by a reaction time at 375 °C (as defined in the examples) comprised between less than 1 second and more than 0.5 seconds, a temperature comprised between 380 °C and 400 °C and a pressure comprised between 240 bar and 260 bar; and wherein the cutin enriched product comprises:

- between 55 and 60 wt.% cutin;

- between 12 and 20 wt.% extractives;

- between 8 and 18 wt.% cellulose; and

- between 2 and 6 wt.% proteins; and

wherein said cutin enriched product is characterized by a size particle below 180 $\mu$m, preferably below 150 $\mu$m, even more preferably below 120 $\mu$m as measured by DLS (Dynamic Light Scattering).

A cutin enriched product obtainable by means of the process of the first aspect, wherein the process is characterized by a reaction time at 375 °C (as defined in the examples) of 0.5 seconds or less and more than 0.01 seconds, a temperature comprised between 300 °C and 400 °C and a pressure comprised between 200 bar and 260 bar; and wherein the cutin enriched product comprises:

- between 65 and 67 wt.% cutin;

- between 10 and 14 wt.% extractives;

- between 13 and 16 wt.% cellulose; and

- between 3 and 4 wt.% proteins; and

wherein said cutin enriched product is characterized by a size particle below 180 $\mu$m, preferably below 150 $\mu$m, even more preferably below 120 $\mu$m as measured by DLS (Dynamic Light Scattering).

In an embodiment, the cutin enriched product obtainable by means of the process defined in the first aspect of the invention consists of:

- between 55 and 72 wt.% cutin;

- between 10 and 25 wt.% extractives;

- between 3 and 16 wt.% cellulose; and

- between 3 and 6 wt.% proteins.

In the context of the invention, a D10 distribution means that the 10% of the particles has a size comprised between 3 and 20 $\mu$m, a D50 distribution means that the 50% of the particles has a size comprised between 20 and 30 $\mu$m and a D90 distribution means that the 90% of the particles has a size comprised between 30 and 130 $\mu$m, the particle size being measured by DLS.

In an embodiment, the cutin enriched product obtained by means of the method of the invention shows a size distribution of D10 comprised between 3 and 20 $\mu$m, D50 comprised 20-30 $\mu$m and D90 comprised between 30 and 130 $\mu$m, measured by DLS.

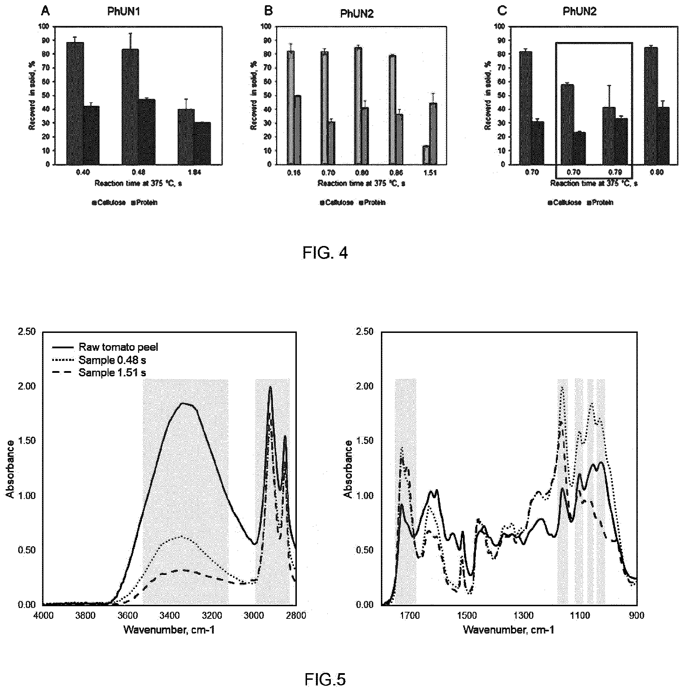

The cutin of the enriched solid obtained by means of the method of the invention shows a structure very similar to the native structure, since the ester bonds in the initial cutin remain non-hydrolized during the process, as shown by the comparison of the FTIR spectra of raw tomato peel and the cutin enriched product obtained after performing the process of the invention, as can be seen in Figure 5.

Another aspect of the invention relates to a cutin enriched product, wherein the cutin enriched product comprises:

- between 40 and 75 wt.% cutin;

- between 10 and 25 wt.% extractives;

- between 2.5 and 20 wt.% cellulose; and

- between 2.5 and 7.5 wt.% proteins;

and wherein said cutin enriched product is characterized by a size particle below 180 $\mu$m, preferably below 150 $\mu$m, even more preferably below 120 $\mu$m as measured by DLS (Dynamic Light Scattering).

The cutin-enriched product may be in combination with other components, preferably with gums and/or vegetable oils. This combination may mimic the properties of the cutin-containing portion in the plant cuticles.

Non-limiting examples of suitable gums are guar gum, locust bean gum, gellan gum, Arabic gum, carrageenan.

Non-limiting examples of vegetable oil are olive oil, rapeseed oil, soybean oil, corn oil, peanut oil, avocado oil.

All the embodiments mentioned above in relation to the cutin-enriched product obtainable by means of the process of the first aspect apply to the cutin-enriched product defined in the previous paragraph.

Uses of the cutin enriched product

Another aspect of the invention relates to the use of the cutin enriched product in the manufacture of polymers, preferably bioplastics, more preferably polyesters; material coating; cosmetic products; and food emulsifiers.

**EXAMPLES**

Materials and methods

Tomato pomace was provided by Pronat Company (Don Benito, Badajoz, Spain). Acetic acid used in some experiments was purchased from Panreac. Chloroform 99% and methanol for UV, IR, HPLC, and ACS, used for Soxhlet extraction were purchased from Acros Organics and Panreac respectively. For acidic hydrolysis, sulfuric acid 72 % was used. The 72 % was prepared in-house using 96% sulfuric acid purchased from Panreac. Calcium carbonate used for the neutralization of samples was purchased from Sigma Aldrich. Water used for Soxhlet extraction, experiments, and other analysis, when it was necessary, was Milli-Q and type III grade, produced in the laboratory of University of Valladolid, on equipment from company Millipore (Milan, Italy).

Tomato pomace separation

To separate peel and seeds fractions, around 1kg of pomace was placed in approximately 5 liters of type III water in a square-shaped container, well mixed, and left for approximately 10 min during which the fractions were separated. Seeds remain at the bottom of the container while the peel floats on the surface. Afterward, the peel was collected from the surface, yet some seeds remained in the peel fraction. The absorbed water was first drained by squeezing and finally, the tomato peel fraction was placed in a well-ventilated room for approximately two weeks or in the oven with ventilation at 60 °C for a few days for drying. Dry tomato peel contained approximately 5 % of moisture. Dry tomato peel was first ground in a kitchen blender and finally, ball milled using Retsch equipment, for 4 h.

Even though peel and seed fractions were separated as representative example of one embodiment of the process of the invention, this is not required as both peel and seeds contain substantial amounts of cutin, nevertheless seeds may contain higher amount of proteins.

Experimental setup

The experiments were done at two plants for continuous Supercritical Water Hydrolysis (SCWH) named PHUn1 and PHUn2. In both cases, a tubular reactor was used, which consisted of a stainless steel pipe with a wall thickness enough to sustain very high pressure. While the inner diameter of the pipe is constant, the length is changeable which allows us to change reaction time with already fixed SCW and biomass suspension stream flows. The tubular reactor is preceded by a T mixer where the preheated SCW stream and suspension with the cutin-containing material stream are met. Inside of the T mixer, instantaneous mixing happens (microseconds) and a homogenous reaction stream runs through the above-mentioned tubular reactor. At the reactor exit, a decompression valve is placed. Due to the sudden decrease in pressure and based on the Joule-Thomson effect, the output stream is instantaneously cooled down when the reactions are stopped.

The main difference between the two plants is that PHUn2 has an automatically controlled decompression valve while this valve is manual in PHUn2; PHUn2 is equipped with a flash separator where the product, which comes from the reactor, is separated in two streams: downstream (product concentrated stream) and upstream (product free stream). Tested conditions are shown in Table 1.

The raw material for these experiments was prepared by mixing milled tomato peel with water in a way that the final concentration of suspension was between 4 and 11 %. Additionally, experiments 6 and 8 (Table 1 below) were done with the addition of acetic acid (50 % on a dry basis suspension) in biomass suspension.

Table 1. Conditions tested in experiments

| Equipment | No. | Reaction time | Reaction time at 375 °C | Reaction temperature | Reaction pressure |
|---|---|---|---|---|---|
| PHUn1 | 1 | 0.25 s | 0.48 s | 390 ± 6.46 °C | 258 ± 7.50 bar |
| | 2 | 1.05 s | 1.84 s | 388 ± 2.23°C | 254 ± 7.45 bar |
| | 3 | 6.33 s | 0.40 s | 312 ± 9.83 °C | 206 ± 8.50 bar |
| PHUn2 | 4 | 0.06 s | 0.16 s | 398 ± 21.33 °C | 251 ± 1.32 bar |
| | 5 | 0.37 s | 0.86 s | 394 ± 4.09 °C | 251 ± 3.90 bar |
| | 6* | 0.49 s | 0.79 s | 386 ± 9.56 °C | 251 ± 3.51 bar |

| | | | | |
|---|---|---|---|---|
| 7 | 0.51 s | 0.80 s | 385 ± 11.89 °C | 251 ± 1.55 bar |
| 8* | 0.52 s | 0.70 s | 382 ± 6.18 °C | 241 ± 1.43 bar |
| 9 | 0.53 s | 0.70 s | 381 ± 7.95 °C | 241 ± 1.05 bar |
| 10 | 0.89 s | 1.51 s | 387 ± 6.14 °C | 251 ± 1.57 bar |

*In those conditions acetic acid was added to the tomato peel suspension.

In hydrothermal processes, the Severity factor ($R_0$) is often used to describe experimental conditions by combining the impact of reaction time and temperature. The severity factor provides a measurement of how much reaction has occurred in time ti at temperature Ti relative to a reference temperature Tb has taken place. Similar values of $R_0$ would lead to similar effects on the reactions than the studied conditions (Posmanik et al., 2017, DOI: 10.1016/j.supflu.2016.09.004). This work calculated reaction time at 375 °C from the formula for a severity factor (R0) (Equation 1):

$$R_0 = t_i \times exp\ ((T_i\text{-}T_b)/\omega)\ (Eq\ 1)$$

where $t_i$ is the reaction time (s), $T_i$ is the reaction temperature (K), and $T_b$ is the base or reference temperature (K). In most studies, the reference temperature is assigned to 100°C. Further, $\omega$ is a fitted parameter (Equation 2) where $T_f$ represents the middle of the range for experimental conditions (floor temperature) (K), R is the universal gas constant (J/(molK)) and Ea is the activation energy of the biomass (kJ/mol). In literature, the commonly used value for this factor is 14.75 K, corresponding to the activation energy ($E_a$) of hemicellulose hydrolysis (111 kJ/mol). However, all experiments, except experiment number 3, were run around the critical point of water when the reaction medium has considerably different properties when compared to 100 °C. For that reason, the reference temperature in this application was 375 °C. Additionally, tomato peel is a complex biomass structure, therefore, the calculation of the fitting parameter based only on the activation energy of hemicellulose may be an oversimplification. The activation energy of biomass was calculated as the sum of the share of activation energies of the following tomato peel compounds (Equation 3): cellulose (164 kJ/mol), hemicellulose (111 kJ/mol), and part of tomato peel which is calculated as pectin (111 kJ/mol). Additionally, the activation energy of protein (157 kJ/mol) is also taken into account although proteins are not originally part of the peel but seeds that remain in the peel fraction after the above-explained separation process. These compounds of the tomato peel were chosen due to the expectation that they would be primarily hydrolyzed in the process. For the $T_f$, the middle of experimental conditions was used at 350 °C. Taking this into account, the final number obtained for the activation energy was 141.11 kJ/mol and the fitting parameter was 22.88 K.

$$\omega = \frac{Tf^2\ R}{Ea}\ (Eq\ 2)$$

$$E_a\ (tomato\ peel) = \Sigma\ (y_i \times Ea_i)\ (Eq\ 3)$$

Feed and sample characterization

For all performed experiments (see Table 1) sampling was done from two sources: prepared tomato peel suspension (hereafter called feed) and the sample obtained after the process (hereafter called sample). Both samples appeared as suspensions partially dissolved in water. The liquid and solid phases are separated by centrifugation. The solid phase, after separation, was washed several times with water and left to dry.

Microscopy and environmental scanning electron microscopy analysis

The conventional microscopy method was used to study the surface morphology of raw tomato peel before and after the milling process (tomato peel in powder). The microscope-type Leica DM1000 LED from Leica Microsystems, Spain was used. Micrographs were obtained at 40x magnification.

An environmental scanning electron microscopy (ESEM) (FEI QUANTA 200 FEG ESEM, FEI Company Czech Republic) was used to study tomato peel powder and the sample's surface characteristics. The sample suspensions were analyzed, as obtained during the process, under low-vacuum conditions (0.6 mbar). Micrographs were obtained at 4000x, 5000x, and 80000x magnification. Energy Dispersive Spectroscopy (EDS) data were collected with an EDAX Genesis module coupled to the ESEM.

The surface morphology of raw tomato peel before milling showed the characteristic shape of the epidermal cells (Figure 5A). The cells' size was varied from 30 $\mu$m and more. This kind of structure had already been noted in the literature (Moreira, Bento, Pais, Petit, Escórcio, Correia, Pinheiro, Haliński, et al., 2020). After the milling process, when particle size was reduced to less than 250 $\mu$m the epidermal cell structure was destroyed as can be seen in Figure 5B. The same conclusion was confirmed by the ESEM picture of the powdered tomato peel (Figure 5C).

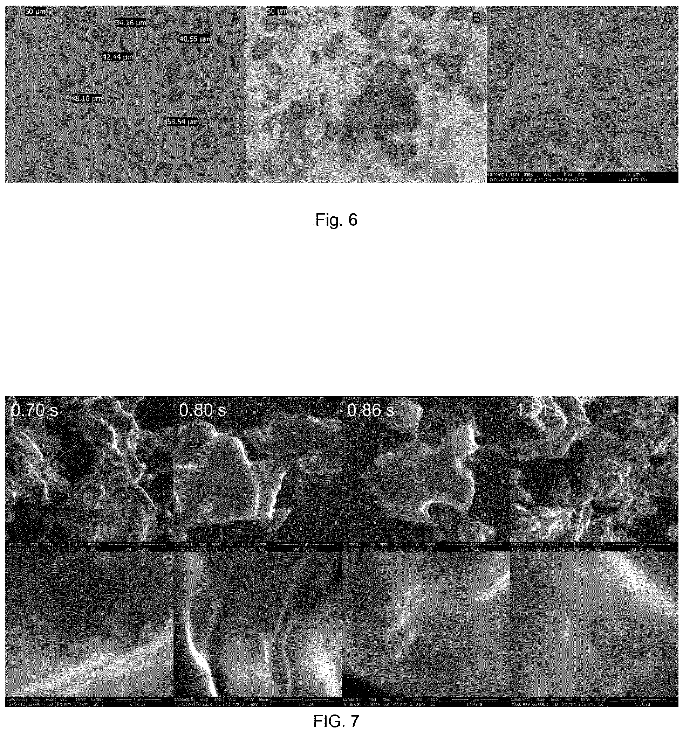

ESEM pictures of samples (Figure 6) were done from sample suspensions as it was obtained in the process in order to prevent coagulation or any other influence on surface morphology during drying. However, there was no significant difference in surface morphology regardless of applied conditions. Thus, although particle size was drastically reduced in the process it did not influence the main structure with cutin as the dominant component.

Characterization of the solid phase

For the calculation of the yield of the solid part of the sample, the following procedures and equations were used. Firstly, determination of the total amount of solid in water in prepared feeds suspensions and obtained samples suspensions (TS), part of the feeds and samples that was dissolved in water (DS), and part of feeds and samples suspended but not dissolved in water (SS) was performed. Furthermore, the TS value can also be related to feed and sample concentration. For determination, TS, approximately 2 g of well-mixed, homogeneous suspension was placed in the previous temperate and measured aluminium pan and put in the oven at 105 °C overnight to dry. In the same way, DS was determined by filtering approximately 2 g of well-mixed, homogeneous suspension through a 22 $\mu$m filter in the previous temperate and measured Al pan and putting it in the oven at 105 °C overnight to dry. Further, the SS value is obtained as the difference between TS and DS. Finally, the yield of the solid was calculated by utilization of equation 4 and the results are shown in Table 2.

$$\text{Solid yield \%} = \frac{\frac{SS_{sample}}{TS_{sample}}}{\frac{SS_{feed}}{TS_{feed}}} \times 100\% \text{ (Eq 4)}$$

Table 2. Solid yield of the experiments

| Experiment | Solid yield (%) |
|:---:|:---:|
| 1 | 92.07 |
| 2 | 83.80 |
| 3 | 92.13 |
| 4 | 94.27 |
| 5 | 77.28 |
| 6* | 83.27 |
| 7 | 82.02 |
| 8* | 77.31 |
| 9 | 84.72 |
| 10 | 70.08 |

The solid phase of feed and sample was characterized by following the same procedure explained previously for the preliminary characterization of tomato peel fraction.

Liquid phase analysis

The liquid part of the samples was analyzed to determine the yield of products of hydrolysis of polysaccharides after carrying out the process of the invention, primarily C5 and C6 sugars as well as sugar degradation products. To transform the residual oligomers in the liquid phase into monomeric sugars that can be examined and measured by HPLC, the liquid phase of the samples was subjected to one-step acid hydrolysis. The procedure involved adding 72% sulfuric acid in a way that the final acid concentration was 4%. Hydrolysis was run for 1h at 120 °C. Finally, the sample was cooled at room temperature and neutralized with $CaCO_3$ up to pH 6 to prepare it for HPLC analysis. Thereafter, HPLC analysis was done as described above.

Tomato peel elementary analysis and characterization

In Table 3 presents the elementary composition of tomato peel fraction, which was determined at the Sciences and Technology Park, University of Burgos using EA Flash 2000 Elemental Analyzer (Thermo Fisher Scientific), TCD Detector, and Mettler Toledo XP6 Microbalance. The technique used for analysis was elemental analysis by combustion, where both organic and inorganic substances are converted into elemental gases which, after subsequent reduction, are separated in a chromatographic column and transferred to a thermal conductivity detector.

As expected, carbon was the dominant element. A small amount of nitrogen detected with elementary analysis refers very likely to proteins from tomato seeds remaining in the peel fraction after separation.

Table 3 Elementary composition

| Element | N | C | H | S |
|---|---|---|---|---|
| Amount, % | 1.49 ± 0.04 | 58.85 ± 0.05 | 8.33 ± 0.06 | 0.00 |

The initial composition of tomato peel used in the experiment is determined as follows:
Determination of Extractives. Extractives were extracted by Soxhlet extraction with chloroform and methanol for 5 hours separately and finally water extraction for 24h. First, a rotary evaporator was used to evaporate solvents for chloroform and methanol extractives. Finally, extractives were placed in the oven at 50 °C overnight to dry completely. Water extractives were first frozen and afterward placed in a laboratory freeze dryer for a few days to dry completely. The total amount of extractives was calculated as the sum of individual fractions.

Determination of total phenolic content.

Besides total extractive content, phenolic compounds, as one group of extractives were separately additionally determined (Table 4 below). Firstly, raw tomato peel powder and the solid part of the samples were subjected to extraction with methanol in the ratio of 1:10 (g:ml) at room temperature for one hour with constant stirring. Therefore, the mixture was filtered by vacuum filtration to obtain a liquid extract. Finally, the concentration of phenolic compounds was determined by utilization of the Folin-Ciocalteu method. Additionally, a similar extraction was done with water.

Tabla 4. Total phenolic content (reaction time at 375 ºC is shown)

| Sample | Total phenolic content | |
|---|---|---|
| | Methanol | Water |
| Raw tomato peel | 0.14 % | 0.15 % |
| Sample 1 (0.48 s) | 2.22 % | 0.04 % |
| Sample 2 (1.84 s) | 2.85 % | 0.12 % |

Determination of the amount of carbohydrates. Samples free of extractives were placed in pressure tubes and first treated with 72 % sulfuric acid at 30 °C. Upon completion of 60-minute hydrolysis, the mixture was diluted so the acid reached a 4 % concentration by adding deionized water, and tubes were then placed for 1 h at 120 °C. Afterward, the hydrolysis solution was cooled at room temperature and filtered through previously measured ashless filter paper. The solid phase on filter paper was washed several times with deionized water and placed in the oven at 40 °C overnight for drying while the liquid phase was neutralized with calcium carbonate up to pH 6 to prepare samples for HPLC sugar analysis. Oven-dried solids on filter paper were measured and afterward placed in crucibles at 550 °C to determine ash. Oven-dry solids were considered native cutin, which can be confirmed by FTIR analysis of this solid.

For said HPLC analysis, a Shodex SH-1011 column at 50 °C was used. Sulfuric acid (0.01 N) was used as the mobile phase with a 0.8 mL/min flow rate. A Waters IR detector 2414 was used to identify the sugars and their derivatives. Quantification was carried out using standard calibration curves.

Determination of the protein content. Total Kjeldahl nitrogen was determined according to APHA Standards Methods and then total proteins were calculated as Kjeldahl N $\times$ 6.25.

Determination of moisture and ash content. The amount of moisture was determined following the NREL procedure for the Determination of Total Solids in Biomass and Total Dissolved Solids in Liquid Process Samples while ash content was determined following the NREL (National Renewable Energy Laboratory) procedure for the Determination of Ash in Biomass (Sluiter et al., 2008a) (Sluiter et al., 2008b). The moisture amount was used for the calculation of oven dry weight (ODW). This value was later used for all calculations where ODW was required.

The composition analysis of the tomato peel fraction before the experiment is given in Table 5.

Table 5. Compositional analysis for a tomato peel sample before the process of the invention (dry basis)

| Fraction | Amount, % w/w |
|---|---|
| Extractives | 13.25 ± 1.98 |
| Cutin | 52.90 ± 1.70 |
| Cellulose | 11.00 ± 3.26 |
| Hemicellulose | 2.62 ± 0.42 |
| Protein | 9.71 ± 0.56 |
| Ash | 1.60 ± 0.03 |
| Others | 8.92 |

A comparison between the content of cutin in the product before and after the experiments described in Table 1 is shown in Table 6. For a better characterization of mass balance variation, the quantitative determination of cutin content and other components in the tomato peel was carried out before and after each experiment.

Table 6. Amount of cutin and other components (wt.% on a dry basis) in the product before and after the process of the invention

| Entry | Cutin % (Before/after) | Extractives %, (Before/After) | Cellulose %, (Before/After) | Hemicellulose % (Before/After) | Protein % (Before/After) |
|---|---|---|---|---|---|
| 1 | 53.97 ± 0.98 | 7.18 ± 0.85 | 14.62 ± 0.85 | 2.46 ± 0.54 | 8.41 ± 0.38 |
| | 66.44 ± 0.62 | 11.15 ± 1.17 | 13.24 ± 1.84 | 0.00 ± 0.00 | 4.29 ± 0.12 |
| 2 | 55.14 ± 1.06 | 6.48 ± 2.02 | 14.07 ± 1.16 | 2.67 ± 0.34 | 8.39 ± 0.15 |
| | 71.99 ± 0.59 | 14.35 ± 0.83 | 6.75 ± 1.24 | 0.00 ± 0.00 | 3.02 ± 0.03 |
| 3 | 56.02 ± 1.72 | 6.14 ± 1.90 | 17.07 ± 0.14 | 3.09 ± 0.02 | 7.88 ± 0.23 |
| | 67.12 ± 0.28 | 10.34 | 16.41 ± 0.71 | 0.00 ± 0.00 | 3.58 ± 0.28 |
| 4 | 44.94 ± 2.99 | 8.21 ± 4.32 | 18.11 ± 1.16 | 3.10 ± 0.50 | 7.79 ± 0.31 |

| | | | | | |
|---|---|---|---|---|---|
| | 65.55 ± 0.85 | 10.85 ± 0.34 | 15.79 ± 1.04 | 0.00 ± 0.00 | 4.12 ± 0.05 |
| 5 | 38.58 ± 0.21 | 18.30 ± 1.62 | 13.64 ± 3.03 | 2.17 ± 0.38 | 11.20 ± 0.27 |
| | 57.00 ± 1.18 | 18.59 ± 0.57 | 13.90 ± 0.16 | 0.00 ± 0.00 | 5.25 ± 0.56 |
| 6* | 44.22 ± 1.60 | 12.13 ± 5.12 | 16.55 ± 1.98 | 3.65 ± 0.50 | 10.99 ± 0.01 |
| | 59.85 ± 0.95 | 18.85 ± 5.92 | 8.15 ± 3.18 | 0.00 ± 0.00 | 10.99 ± 0.01 |
| 7 | 38.58 ± 0.21 | 18.30 ± 1.62 | 13.64 ± 3.03 | 2.17 ± 0.38 | 11.20 ± 0.27 |
| | 59.48 ± 0.69 | 18.43 ± 0.98 | 14.10 ± 0.22 | 0.00 ± 0.00 | 5.62 ± 0.70 |
| 8* | 43.43 ± 2.56 | 8.65 ± 1.79 | 18.88 ± 0.94 | 5.03 ± 0.28 | 10.62 ± 0.35 |
| | 59.51 ± 5.03 | 13.97 ± 1.44 | 14.12 ± 0.33 | 0.08 ± 0.05 | 3.16 ± 0.15 |
| 9 | 40.48 ± 2.40 | 7.78 ± 2.00 | 19.63 ± 0.34 | 4.96 ± 0.09 | 11.08 ± 0.76 |
| | 54.56 ± 0.52 | 12.39 ± 0.14 | 18.92 ± 0.48 | 0.00 ± 0.00 | 4.07 ± 0.26 |
| 10 | 44.13 ± 0.36 | 12.54 ± 0.39 | 14.62 ± 3.08 | 3.03 ± 0.49 | 10.09 ± 2.06 |
| | 62.81 ± 0.61 | 25.75 ± 2.38 | 2.79 ± 0.06 | 0.00 ± 0.00 | 6.44 ± 0.96 |

*In those conditions acetic acid was added to the tomato peel suspension.

Particle size analysis

The particle size of the feed ("before" in Table 7 below) and obtained cutin-enriched sample ("after" in table 7 below) was analyzed before centrifugation. The measurement was carried out by a Dynamic Light Scattering (DLS) Mastersizer 2000. The particle size distribution was calculated based on volume distribution.

Table 7. Standard percentile readings from the analysis d (0.1), d (0.5) and d (0.9)

| Experiment | Before/After | d (0.1), µm | d (0.5), µm | d (0.9), µm |
|---|---|---|---|---|
| 1 | Before | 13.838 | 63.327 | 196.362 |
| | After | 3.018 | 17.026 | 39.732 |
| 2 | Before | 14.816 | 70.582 | 221.492 |
| | After | 7.227 | 29.836 | 61.932 |
| 4 | Before | 8.767 | 46.730 | 177.316 |
| | After | 4.500 | 19.995 | 61.356 |
| 5 | Before | 13.880 | 82.554 | 226.601 |
| | After | 3.356 | 17.127 | 47.214 |

| | | | | |
|---|---|---|---|---|
| 6* | Before | 12.373 | 75.159 | 206.867 |
| | After | 4.107 | 22.242 | 60.951 |
| 7 | Before | 13.880 | 82.554 | 226.601 |
| | After | 3.765 | 21.683 | 63.902 |
| 8* | Before | 11.016 | 76.513 | 219.105 |
| | After | 4.566 | 21.031 | 53.417 |
| 9 | Before | 11.612 | 81.564 | 242.200 |
| | After | 5.575 | 24.759 | 114.322 |
| 10 | Before | 14.563 | 84.021 | 245.385 |
| | After | 20.084 | 61.712 | 111.822 |

*In those conditions acetic acid was added to the tomato peel suspension

Characterization of cutin by FTIR analysis. FTIR analysis was conducted with a Bruker Tensor 27 spectrometer. All spectra were recorded in the range from 4000 to 400 cm$^{-1}$ with 4 cm$^{-1}$ resolution. The recorded spectra were baseline-subtracted and normalized to the maximum peak intensity. Table 8 shows a comparison of the main FTIR peaks of the cutin enriched products (corresponding to experiments 1 and 10 of tables 1 and 2) with the raw tomato peel (before running said experiments).

Table 8. Main FTIR peaks and their assignments (cm$^{-1}$)

| Assignment | Sample 1 | Sample 10 | Raw tomato peel | Tomato peel component |
|---|---|---|---|---|
| v(O-H· · ·O) | 3344 | 3339 | 3337 | Cutin, polysaccharides |
| va(CH2) | 2923 | 2923 | 2921 | Cutin, waxes |
| vs(CH2) | 2852 | 2852 | 2852 | Cutin, waxes |
| v(C=O) ester | 1728 | 1728 | 1728 | Cutin |
| v(C=O· · ·H) ester | - | 1710 | - | Cutin |
| v(C=O· · ·H) acid | - | - | - | Cutin |
| v(C=C) phenolic acid | 1632 | 1634 | 1626 | Phenolic compounds |
| v(C-C) aromatic | | | 1605 | Phenolic compounds |
| v(C-C) aromatic | 1557 | | | Phenolic compounds |

| | | | | |
|---|---|---|---|---|
| ν(C-C) aromatic (conjugated with) | 1518 | 1516 | 1514 | Phenolic compounds |
| δ(CH2) scissoring | 1455 | 1461 | | Cutin, waxes |
| ν(C-C) aromatic (conjugated w) | | | 1438 | Phenolic compounds |
| δ(CH2) wagging and twisting | 1367 | 1365 | 1369 | Cutin, waxes |
| δ(OH) | 1248 | 1246 | 1236 | Cutin, polysaccharides |
| νa(C-O-C), ester | 1163 | 1167 | 1163 | Cutin |
| νs(C-O-C), ester | 1102 | 1104 | 1102 | Cutin |
| ν(C-O-C), glycosydic bond | 1059 | 1065 | 1055 | Polysaccharides |
| ν(C-O) | | | | Cutin, polysaccharides |
| γ(C-H) aromatic | 834 | 834 | 832 | Phenolic compounds |
| δ(CH2) rocking | 722 | 724 | 720 | Cutin, waxes |

From table 8, it appears that most of the native cutin FTIR peaks are preserved after using the method of the invention.

## Claims

1. Process for obtaining a cutin-enriched product from the cutin-containing portion of a plant matter, said process comprising treating said cutin-containing portion with water at a temperature between 300 and 500 °C and at a pressure between 85 and 400 bar, during less than 50 seconds.

2. Process according to claim 1, comprising the steps of:

   a) optionally, pre-treating the cutin-containing portion of a plant matter;
   b) mixing said optionally pre-treated cutin-containing portion with water to obtain a suspension;
   c) treating said suspension with water at a temperature between 300 and 500 °C and at a pressure between 85 and 400 bar, wherein said treatment is carried out during less than 50 seconds, to obtain the cutin-enriched product and a liquid fraction; and
   d) optionally, separating the cutin-enriched product from the liquid fraction.

3. Process according to claim 1 or 2, wherein the cutin-containing portion of a plant matter is the fruit of a fruit-bearing plant matter, preferably a fruit selected from tomato, grape, apple, pear, papaya, peach, or a combination thereof; more preferably is the pomace of said fruit; even more preferably is tomato pomace.

4. Process according to any one of claims 1 to 3, wherein the cutin-containing portion of a plant matter is pre-treated by grinding, drying, wet or dry milling, $sCO_2$ extraction, $CO_2$ explosion, centrifugation, sonication, ammonia explosion, steam explosion or a combination thereof.

5. Process according to any one of claims 2 to 4, wherein the amount of the cutin-containing portion of a plant matter in the suspension of step b) is between 0.1 and 50 wt.%, preferably between 1 and 30 wt.%, even more preferably between 4 and 11 wt.%.

6. Process according to any one of claims 2 to 5, further comprising the addition to the suspension of step b) of an acid.

7. Process according to claim 6, wherein the acid is selected from the group consisting of acetic acid, formic acid, p-toluenesulfonic acid (PTSA), trifluoroacetic acid, camphorsulphonic acid, citric acid, oxalic acid HCl, $H_2SO_4$, $HNO_3$, $H_3PO_4$, and mixtures thereof; preferably acetic acid and/or $H_2SO_4$; more preferably acetic acid.

8. Process according to claim 7, wherein the acid is added in an amount comprised between 10% and 70% on a dry basis, preferably between 15% and 60% on a dry basis, more preferably between 20% and 50% on a dry basis.

9. Process according to any one of the preceding claims, wherein the temperature for treating the cutin-containing portion of a plant matter is comprised between 374 °C and 500 °C, preferably between 374 °C and 450 °C, and the pressure is comprised between 221 and 400 bar, preferably between 221 and 260 bar.

10. Process according to any one of the preceding claims, wherein the treatment is performed during less than 30 seconds, preferably less than 10 seconds; more preferably the treatment is performed between 0.05 to 10 seconds.

11. Process according to any one of claims 1 to 8, wherein the cutin-containing portion of a plant matter is the pomace of a fruit selected from tomato, grape, apple, pear, papaya, peach, or a combination thereof, preferably tomato pomace, said process comprising the steps of:

   a) optionally, mechanically pre-treating the pomace, preferably tomato pomace, by grinding and/or milling;
   b) mixing said optionally mechanically pre-treated pomace, preferably tomato pomace, with water to obtain a suspension;
   c) treating said suspension with water at a temperature comprised between 310 °C and 450 °C, preferably between 310 °C and 400 °C, and at a pressure comprised between 175 and 300 bar, preferably between 200 and 260 bar, to obtain the cutin-enriched product and a liquid fraction, wherein said treatment is performed during a time between 0.03 and 10 seconds; and
   d) separating the cutin-enriched product from the liquid fraction by centrifugation and/or filtration.

12. A cutin-enriched product obtainable by means of the process defined in claims 1 to 11, wherein the cutin-enriched product comprises, preferably consists of:

   - between 40 and 75 wt.% cutin;
   - between 60 and 25 wt.% consisting of extractives, cellulose and proteins; and

   wherein said cutin-enriched product is **characterized by** a D90 size particle below 180 $\mu$m, preferably below 150 $\mu$m, even more preferably below 120 $\mu$m as measured by DLS.

13. A cutin-enriched product obtainable according to claim 12, wherein the cutin enriched product comprises:

   - between 40 and 75 wt.% cutin;
   - between 10 and 25 wt.% extractives;
   - between 2.5 and 20 wt.% cellulose; and
   - between 2.5 and 7.5 wt.% proteins;

   and wherein said cutin-enriched product is **characterized by** a D90 size particle below 180 $\mu$m, preferably below 150 $\mu$m, even more preferably below 120 $\mu$m as measured by DLS.

14. A cutin-enriched product, wherein the cutin-enriched product comprises:

   - between 40 and 75 wt.% cutin;

- between 60 and 25 wt.% consisting of extractives, cellulose and proteins; and

wherein said cutin enriched product is **characterized by** a D90 size particle below 180 $\mu$m, preferably below 150 $\mu$m, even more preferably below 120 $\mu$m as measured by DLS.

15. Use of the-cutin enriched product according to any one of claims 12 to 14 in the manufacture of polymers, preferably bioplastics, more preferably polyesters; material coatings; cosmetic products; and food emulsifiers.

FIG. 1

FIG. 2

FIG. 3

FIG. 4

FIG.5

Fig. 6

FIG. 7

**Europäisches Patentamt**
**European Patent Office**
**Office européen des brevets**

# EUROPEAN SEARCH REPORT

**Application Number**

EP 24 38 2515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 3 386 303 B1 (APEEL TECH INC [US]) 11 March 2020 (2020-03-11) | 1-15 | INV. C11B13/00 C07C51/09 C07C67/31 C08G63/06 |
| Y | * paragraph [0001] - paragraph [0136]; figures; examples * ----- | 12-15 | |
| Y | WO 2022/094339 A1 (APEEL TECH INC [US]) 5 May 2022 (2022-05-05) | 12-15 | |
| A | * [0005], [0142] * ----- | 1-11 | |

**TECHNICAL FIELDS SEARCHED (IPC)**

C11B
C09J
C07C
C08G

The present search report has been drawn up for all claims

| Place of search | Date of completion of the search | Examiner |
|---|---|---|
| Munich | 3 October 2024 | Alevisopoulos, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 38 2515

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2024

| Patent document cited in search report | | Publication date | Patent family member(s) | | Publication date |
|---|---|---|---|---|---|
| EP 3386303 | B1 | 11-03-2020 | CN | 108966638 A | 07-12-2018 |
| | | | CN | 112841185 A | 28-05-2021 |
| | | | EP | 3386303 A1 | 17-10-2018 |
| | | | EP | 3649860 A1 | 13-05-2020 |
| | | | ES | 2797697 T3 | 03-12-2020 |
| | | | ES | 2939007 T3 | 18-04-2023 |
| | | | IL | 259820 A | 31-07-2018 |
| | | | IL | 272083 A | 31-03-2020 |
| | | | JP | 6549326 B2 | 24-07-2019 |
| | | | JP | 2019501154 A | 17-01-2019 |
| | | | US | 2018044276 A1 | 15-02-2018 |
| | | | US | 2018222835 A1 | 09-08-2018 |
| | | | US | 2019031590 A1 | 31-01-2019 |
| | | | US | 2020100514 A1 | 02-04-2020 |
| | | | US | 2021291074 A1 | 23-09-2021 |
| | | | WO | 2017100636 A1 | 15-06-2017 |
| WO 2022094339 | A1 | 05-05-2022 | CN | 116457332 A | 18-07-2023 |
| | | | EP | 4237400 A1 | 06-09-2023 |
| | | | IL | 302360 A | 01-06-2023 |
| | | | JP | 2023548012 A | 15-11-2023 |
| | | | US | 2022135510 A1 | 05-05-2022 |
| | | | US | 2024092719 A1 | 21-03-2024 |
| | | | WO | 2022094339 A1 | 05-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023198943 A1
- EP 4116352 A1
- EP 3039064 A1
- EP 3386303 A1

**Non-patent literature cited in the description**

- **HEREDIA-GUERRERO et al.** *Journal of Experimental Botany*, 2017, vol. 68 (19), 5401-5410
- **FICH et al.** *Annu. Rev. Plant Biol.*, 2016, vol. 29 (67), 207-233
- **ZEISLER-DIEHL et al.** *J Plant Physiol*, 2018, vol. 227, 66-74
- **BENITEZ et al.** *Biochim. Biophys. Acta*, 2004, vol. 1674 (1), 1-3
- **C. M. MARTINEZ et al.** *The Journal of Supercritical Fluids*, 2019, vol. 143, 242-250